# EUROPEAN PATENT APPLICATION

(11) **EP 3 385 166 A1**
(43) Date of publication of application: **10.10.2018**
(21) Application number: 17164647.4
(22) Date of filing: 03.04.2017
(51) Int. Cl.: B64D 11/06

(54) **A SEAT FOR A VEHICLE**

(71) Applicant: Adient US LLC, Plymouth MI 48170 (US)
(72) Inventor: MÜLLER, Gerhard, 67659 Kaiserslautern (DE); KREUTZ, Wolfgang, 66879 Reichenbach-Steegen (DE)
(74) Representative: Finger, Catrin

(57) **Abstract**

The present invention refers to a seat (1) for a vehicle, in particular to an aircraft passenger seat. Further, the present invention seeks to improve a seat for a vehicle to bring the seat into one or more positions, e.g. into a taxi, take-off and landing position (also "TTL" or "TT&L" position called), an inclined position or a sleeping position, and to additionally lock the seat (1) to a base structure by means of a latch mechanism (LM2) in the taxi, takeoff or landing position.

## Description

### FIELD OF INVENTION

The present invention refers to a seat for a vehicle. In particular, the invention refers to an aircraft passenger seat or an automotive passenger seat.

### DESCRIPTION OF THE RELATED ART

There are a wide variety of vehicle seats, in particular aircraft passenger seats known in the prior art.

For example, U.S. Pat. No. 9,073,453 describes a seat including a seat pan having a seat pan front edge and a seat pan rear edge. The seat pan front edge defines a first pivot point and the seat pan rear edge defines a second pivot point wherein the first pivot point remains in a substantially fixed position for each of the positions.

The European Patent 2,420,404 defines a vehicle seat comprising a vehicle seat vibration device and a suspension device.

### SUMMARY OF THE INVENTION

The present invention seeks to improve a seat for a vehicle to bring the seat into one or more positions, e.g. into a taxi, take-off and landing position (also "TTL" or "TT&L" position called), an inclined position or a sleeping position. Although, embodiments of the invention will be described with respect to an aircraft seat, it is not limited to such a seat.

The object is achieved by a seat for a vehicle according to claim 1.

Preferred embodiments are given in the dependent claims.

The disclosure provides a seat for a vehicle, in particular an aircraft passenger seat, wherein the seat comprises a seat support structure which is connected to a base structure. The seat support structure provides at least a seat pan having at least a seat pan frame with two lateral seat pan sides, a front seat pan side and a back seat pan side, a backrest having at least a backrest frame that is pivotably mounted to the back seat pan side at a backrest pivot axis, a leg rest having a leg rest frame that is pivotably mounted to the front seat pan side at a leg rest pivot axis. In particular, the leg rest is configured as a calf rest. The seat pan, the backrest and the leg rest are articulated with respect to each other such that the seat is positionable into at least one of a taxi, takeoff and landing position, a comfort inclined position (inclined position) and a sleeping position

Further, the seat is locked to the base structure by at least one latch mechanism when the seat is in the taxi, takeoff and landing position. In particular, the disclosed latch mechanism provides a temporary mechanical fixation between the seat support structure and the base structure and an aircraft floor in the taxi, takeoff and landing position. Thereby, a compensation of forces in different directions which affect the seat can be substantially provided by the latch mechanism. In particular, compressive and tensile forces will be substantially compensated.

The latch mechanism is configured as at least one latch element and at least one pawl element, wherein at least one of the latch elements is provided by the base structure and at least one of the pawl elements is provided by the leg rest and/or at least one of a single lever which is arranged on each of the two lateral seat pan sides, or vice versa.

In an exemplary embodiment, the seat pan frame is pivotably connected to a base structure by the single lever on each of the two lateral seat pan sides. Furthermore, the seat pan, the backrest and the leg rest are articulated with respect to each other and with respect to the base by each of the single levers such that the seat is positionable into at least one of a taxi, takeoff and landing position, a comfort inclined position or a sleeping position.

In particular, the pawl element of the leg rest is configured as a counter bearing, especially a hook-like element, which props the leg rest to the base structure in the so-called TTL position. Therefore, a contact of the leg rest with an aircraft floor is substantially avoided during an event of crash. Additionally, a recliner mechanism of the seat support structure parts are less charged with torques during the event of a crash. Especially, pivot fittings between each of the pivotable seat support structure parts are less charged. Moreover, mechanical vibrations caused by an operating aircraft can be reduced for a passenger's comfort and who desires the TTL position during a flight.

Moreover, the counter bearing provides a temporary four-bar linkage of the seat. In particular, the four-bar linkage substantially increases a reinforcement of the seat.

According to a further aspect of the disclosure, at least one of the latch elements is defined by a front frame side provided by a base frame of the base structure providing the latching mechanism of the leg rest pawl element to the base frame.

Furthermore, at least one of the latch elements is provided in relation to the track mechanism of the base structure providing the latching mechanism of the at least one single lever to the base structure.

The taxi, takeoff and landing position of the seat is a position in which the backrest is in a substantial upright position with respect to the seat pan and/or the base. In particular, the backrest is in a position with an angle with respect to a vertical axis of about 3° to 12°. The leg rest is in a position with an angle with respect to the vertical axis of about 0° or less than 0°, for example -3° to -10°.

The comfort inclined position of the seat is a substantial inclined position in which the backrest and/or the leg rest are in a substantial inclined position. In particular, the backrest is in a position with an angle with respect to the vertical axis of about more than 12° and less than 90°. The leg rest is in a position with an angle with respect to the vertical axis of about more than 0° and less than 85°.

The sleeping position of the seat is a position in which the backrest and/or the leg rest are in a substantial inclined position. In particular, the backrest is in a position with an angle with respect to the vertical axis of about 90°, in particular between 85° and 95°. The leg rest is in a position with an angle with respect to the vertical axis of about 45°, in particular between 40° and 50°.

In an exemplary embodiment, each of the single levers comprises two pivot points. In particular, a first pivot point is substantially connected in relation to the base structure, in particular to a floor or to a length adjuster, for example to a track mechanism, e.g. to an upper track.

In another exemplary embodiment, a second pivot point is substantially connected in relation to the seat pan frame. In particular, the second pivot point is substantially fixed to a lateral seat pan frame part.

According to a further aspect of the disclosure, each of the pivot points is provided by a recliner mechanism. For example, the recliner mechanism is configured as a rotary recliner or a ratchet recliner. In particular, the recliner mechanism is configured as a wobble drive mechanism.

According to an exemplary embodiment, the backrest is pivotably connected to the seat pan by at least one of a backrest pivot fitting in the backrest pivot axis. The leg rest is pivotably connected to the seat pan by at least one of a leg rest pivot fitting in the leg rest pivot axis.

Furthermore, a number of drive units are provided to independently adjust the backrest by driving at least one of the pivot fittings, for example a drive unit for the backrest pivot fitting, a drive unit for the leg rest pivot fitting and/or a drive unit for the recliner mechanism. In particular, a single drive unit is provided for each of the pivot fittings, the leg rest pivot fitting and the recliner mechanism.

According to a further aspect of the disclosure, a control unit is provided to independently control the drive units. The control unit is configured to control adjusting movement of at least one of the seat pan, the backrest or the leg rest. The control mechanism provided by the control unit allows that the seat is continuously adjustable in many positions, for example between the TTL position, comfort seating position and sleeping position.

In an exemplary embodiment, the backrest further comprises a shoulder support and/or a headrest. The backrest and the shoulder support are articulated with respect to each other by at least a shoulder support pivot fitting.

According to a further exemplary embodiment, the leg rest is adjustable in length. The length adjustment allows a customized length of the leg rest of different passengers.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: is a side view of an embodiment of a seat for a vehicle, in particular for an aircraft, with the seat having latch mechanisms and being shown in a taxi, takeoff, and landing position,
- Figure 2: is a side view of the seat showing in figure 1 with the seat being shown in a comfort seating position or limited reclined position,
- Figure 3: is a side view of the seat showing in figure 1 with the seat being shown in a sleeping position,
- Figure 4: is a perspective view of a seat with the seat being shown in a taxi, takeoff, and landing position and having an upholstery,
- Figure 5: is a perspective view of a seat with the seat being shown in a taxi, takeoff, and landing position without an upholstery and with a seat support structure, a base structure and latch mechanisms,
- Figures 6A to 6C: are perspective or side views of the seat showing in figure 4 with the seat support structure covered by an upholstery,
- Figures 7A and 7B: are perspective views of the seat showing in figure 1 with a number of drive units and
- Figure 8: is a perspective view of a seat mounted in a seat suite.

Corresponding parts are marked with the same reference symbols in all figures.

### DETAILED DESCRIPTION OF PREFERRED EMBODIMENTS

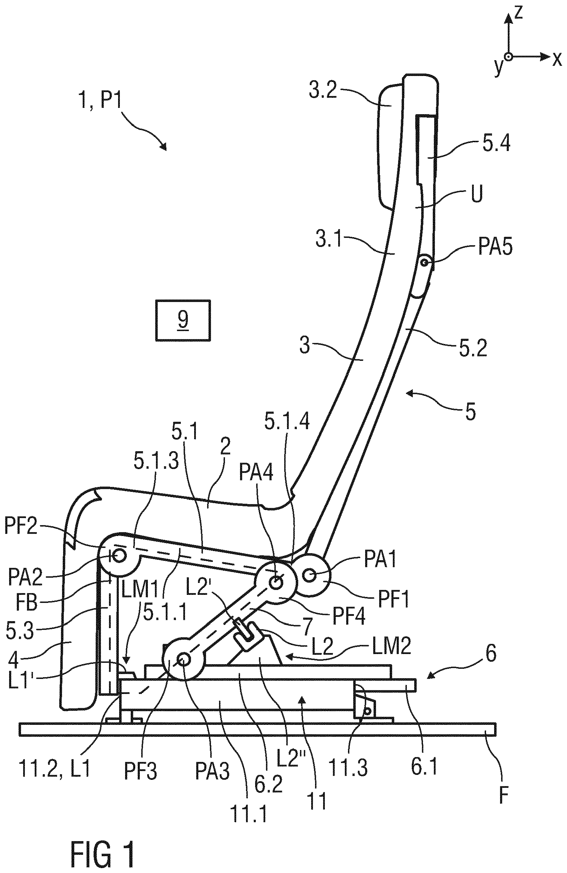

**The** **figure 1** shows a side view of an embodiment of a seat 1 for a not further shown vehicle, in particular for an aircraft. The seat 1 is shown in a taxi, takeoff, and landing position, which is further described as TTL position P1.

For a better understanding of subsequent descriptions of the seat 1 a coordinate system is shown in further figures. The coordinate system comprises a longitudinal axis x, a transverse axis y and a vertical axis z in relation to the aircraft.

The seat 1 comprises a seat pan 2, a backrest 3 and a leg rest 4. In the shown embodiment the backrest 3 comprises a shoulder support 3.1. In one embodiment, the backrest 3 can comprise additionally or alternatively a headrest 3.2, wherein the backrest 3 shown in figure 1 comprises the headrest 3.2.

Further, the seat 1 comprises a seat support structure 5 which is connected to a base structure 6. In the shown embodiment the seat support structure 5 provides an upholstery U. In one embodiment, the upholstery U comprises at least one of a seat pan upholstery part, a backrest upholstery part and/or a leg rest upholstery part. Alternatively, the upholstery U is provided by an one-piece formed upholstered part. Further, the upholstery U can be at least partially attached to the seat support structure 5 by not further shown force-fitted, adhesive and/or form-fitted connection points.

In one embodiment, the force-fitted, adhesive and/or form-fitted connection can provide hook and loop fastener, clip, engage, snap-in and/or plug-in connection points. In another embodiment the upholstery U comprises a number of upholstered cover elements, wherein the seat support structure 5 can be covered by at least one upholstered cover element. In another example, the upholstery U and the seat support structure 5 can be at least partially bonded together.

The seat support structure 5 provides a seat pan frame 5.1 for the seat pan 2 with two lateral seat pan sides 5.1.1, 5.1.2, wherein only one of the two lateral seat pan sides 5.1.1 is shown in figure 1. Additionally, the seat pan frame 5.1, thereby the seat pan 2, comprise a front seat pan side 5.1.3 and a back seat pan side 5.1.4.

Further, the seat support structure 5 comprises a backrest frame 5.2 for the backrest 3 which is pivotably mounted to the back seat pan side 5.1.4 at a backrest pivot axis PA1 (which is understood as an axis parallel to the transverse axis y).

Additionally, a leg rest frame 5.3 for the leg rest 4 is provided by the seat support structure 5, wherein the leg rest frame 5.3 is pivotably mounted to the front seat pan side 5.1.3 at a leg rest pivot axis PA2 (which is understood as an axis parallel to the transverse axis y). In particular, the leg rest 4 is configured as a calf rest.

Moreover, the seat support structure 5 comprises a shoulder support and headrest frame 5.4 which is pivotably mounted to the backrest frame 5.2 at a shoulder support pivot axis PA5. For example, the backrest frame 5.2 and the shoulder support and headrest frame 5.4 are articulated with respect to each other by the shoulder support pivot axis PA5.

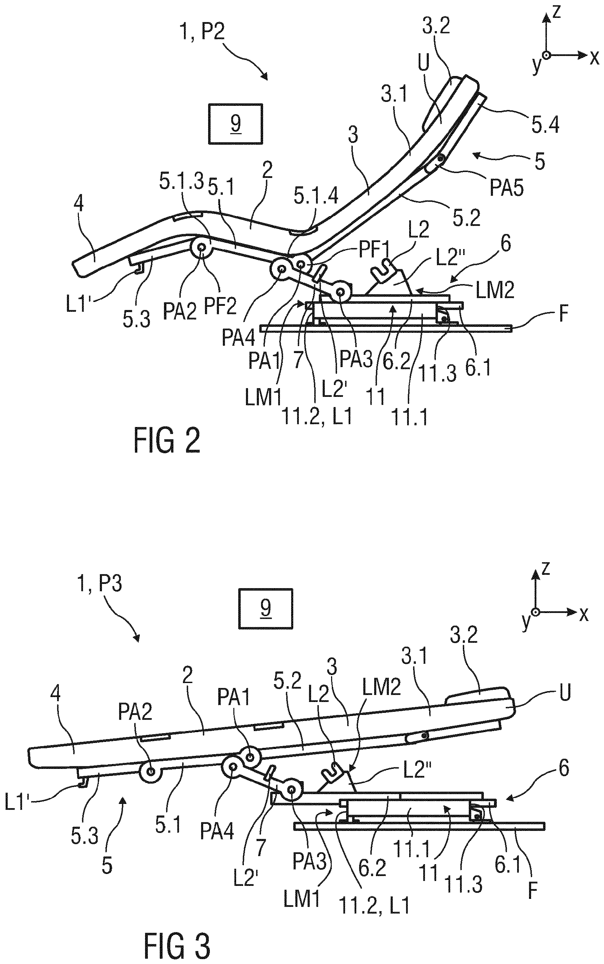

Hence, the seat pan 2, the backrest 3, the leg rest 4 and the shoulder support 3.1 are articulated with respect to each other such that the seat 1 is positionable into at least one of the TTL position P1, a comfort inclined position P2 shown in figure 2 and a sleeping position P3 shown in figure 3.

According to an exemplary embodiment, the backrest frame 5.2 is pivotably connected to the seat pan frame 5.1 by at least one of a backrest pivot fitting PF1 in the backrest pivot axis PA1. The leg rest frame 5.3 is pivotably connected to the seat pan frame 5.1 by at least one of a leg rest pivot fitting PF2 in the leg rest pivot axis PA2. In particular, each of the pivot fittings PF1, PF2 is provided by a recliner mechanism and thereby comprising recliner fittings.

The seat pan frame 5.1 is connected to the base structure 6 by a single lever 7, 8, wherein only one of the single levers 7 is shown in figure 1. In particular, the single lever 7, 8 is provided by a swing arm mechanism. The base structure 6 provides a track mechanism for length adjustment of the seat 1. Therefore, the track mechanism provides a length adjuster for the seat 1.

The track mechanism provides a lower track 6.1 fixedly coupled to the aircraft floor F and an upper track 6.2 which is slidable coupled to the lower track 6.1 for a sliding movement in a longitudinal direction of the aircraft. Further, the base structure 6 comprises a base frame 11 having two lateral sides 11.1, wherein only one of the lateral sides 11.1 is shown. Further, the base structure 6 comprises a front frame side 11.2 and a back frame side 11.3. The lateral sides 11.1 are fixedly secured to the floor F.

In the shown embodiment, the seat pan frame 5.1 is connected to the upper track 6.2 in a front region of the upper track 6.2. In particular, the seat pan frame 5.1 is pivotably connected to the upper track 6.2 on each of the two lateral seat pan sides 5.1.1, 5.1.2. Therefore, the seat pan 2, the backrest 3 and the leg rest 4 are articulated with respect to each other and with respect to the base structure 6 by each of the single levers 7, 8.

Each of the single levers 7, 8 comprises two pivot points PA3, PA4 providing a first pivot point PA3 and a second pivot point PA4 (the pivot axes of the single lever pivot points PA3, PA4 are understood as axes parallel to the transverse axis y). In particular, the first pivot point PA3 is substantially connected in relation to the base structure 6, in particular to the floor F or to the track mechanism, especially to the upper track 6.2. Additionally, the second pivot point PA4 is substantially connected in relation to the seat pan frame 5.1. In particular, the second pivot point PA4 is substantially fixed to each of the lateral seat pan sides 5.1.1, 5.1.2. Further, the second pivot point PA4 is provided in relation to the back seat pan side 5.1.4.

According to another embodiment, each of the single lever pivot points PA3, PA4 is provided by a pivot fitting PF3, PF4, and recliner mechanism in particular. For example, the recliner mechanism is configured as a rotary recliner or a ratchet recliner or any other possible recliner mechanism. In particular, the recliner mechanism is configured as a wobble drive mechanism.

The TTL position P1 of the seat 1 is a position in which the backrest 3 is in a substantial upright position with respect to the seat pan 2, the base structure 6 as well as to the floor F. In particular, the backrest 3 is in a position with an angle with respect to the vertical axis z, especially of about 3° to 12°. The leg rest 4 is in a position with an angle with respect to the vertical axis z, especially of about 0° or less than 0°, for example -3° to -10°. Further, the single levers 7, 8 are in a position with an angle with respect to the vertical axis z of about -45°.

In the TTL position P1 the seat pan 2 of the seat 1 is positioned substantially parallel to the base structure 6 as well as to the aircraft floor F.

In the shown embodiment, the seat pan 2 is slightly inclined with respect to the horizontal plane, wherein the front seat pan side 5.1.3 is positioned higher than the back seat pan side 5.1.4.

To control the adjustment of the seat 1 into at least one of the TTL position P1, any one of the possible comfort inclined positions P2 or the sleeping position P3 a control unit 9 is provided to a passenger of the seat 1 to independently adjust the seat 1 into any one of the positions P1 to P3. In particular, the seat 1 is automatically driven into the TTL position P1, any one of the possible comfort inclined positions P2 or the sleeping position P3 as desired by the passenger.

For example, a sliding mechanism provided by the base structure 6, in particular by the track mechanism, is adjustable in the longitudinal direction. The seat 1 can be driven forwards or backwards, particularly depending on an aft or fore space of the seat 1.

Further, the backrest 3 and the leg rest 4 are independently adjustable so that an inclination of those seat parts is configurable by actuating pivoting movements around one of the pivot axes PA1, PA2.

Moreover, the seat pan 2 can be moved in the longitudinal direction and depending on a swiveling of the single levers 7, 8 in the vertical direction by actuating a pivoting movement of the single levers 7, 8 around the pivot points PA3, PA4.

In particular, the movement of the seat 1 and/or the seat pan frame 5.1 in the longitudinal direction is provided by the pivoting movement of the single levers 7, 8 around the first pivot point PA3. Additionally, the movement of the seat 1 and/or the seat pan frame 5.1 in the vertical direction is provided by the pivoting movement of the single levers 7, 8 around the first pivot point PA3.

Furthermore, an inclination adjustment of the seat pan 2 around an axis parallel to the transverse axis y is provided by the swiveling of the single levers 7, 8 around the pivot point PA4.

Hence, the single levers 7, 8 can be driven in a position with an angle with respect to the vertical axis z of about more an angle depending on a fore space of the seat 1 and less than an angle depending on an aft space of the seat 1.

To provide a temporary mechanical locking between the seat support structure 5 and the base structure 6 in the TTL position P1, latch mechanisms LM1, LM2 are provided by the seat 1. Therefore, the seat 1 can be locked to the base structure 6, especially to the floor F providing safety for aircraft passengers in an event of a crash.

Each of the latch mechanisms LM1, LM2 are configured as at least one latch element L1, L2 and at least one pawl element L1', L2'.

To avoid a contact of the leg rest frame 5.3 and the floor F the leg rest frame 5.3 comprises the pawl element L1' which engages the latch element L1 of the base structure 6. In particular, the front frame side 11.2 of the base frame 11 provides the latch element L1 to lock the leg rest frame 5.3 to the base frame 11, thus the floor F. The leg rest frame 5.3 can be driven to the front frame side 11.2 of the base frame 5.3 in order to avoid a gap between the pawl element L1' and the front frame side 11.2. In particular, the pivot fitting PF2 in of the leg rest frame 5.3 can be adjusted as far as the pawl element L1' contacts the front frame side 11.2 of the base frame 5.3.

Additionally or alternatively, the seat 1 provides the latch mechanism LM2 which is positioned in relation to each or one of the single levers 7, 8 and the base structure 6 to provide an additional and temporary locking between the seat support structure 5 and the base structure 6. Thereby, the latch element L2 is provided by the track mechanism of the base structure 6. In particular, the latch element L2 is fixedly coupled to the upper track 6.2 of the track mechanism.

In the shown embodiment, the latch mechanism LM2 comprises an adaptor element L2" which is fixedly coupled to the upper track 6.2. For example, the adaptor element L2" is a fitting piece and/or a protection housing for the latch element L2. Further, the pawl element L2' of the latch mechanism LM2 is provided by each or one of the matching single levers 7, 8. Especially, a four-bar linkage FB, which is shown as a dash line in figure 1, is accomplished by application and arrangement of the latch mechanisms LM1, LM2 to the seat 1.

In an exemplary embodiment, the pawl elements L1', L2' are each configured as a counter bearing, in particular hook-like counter bearing to substantially increases a reinforcement of the seat 1 in the TTL position P1.

Moreover, the latch mechanisms LM1, LM2 can be at least one of a snap-in, clip, interlock, hook-in, clasp/buckle, bolt and/or any other form-fitting and/or force-fitting locking mechanism.

**Figure 2** is showing a side view of the seat 1 with the seat 1 being in one of many desirable comfort inclined positions P2.

For example, a disengagement of the pawl elements L1', L2' from the latch elements L1, L2 is provided by inclination movements and/or movements in the longitudinal and vertical directions of the seat support structure parts. In particular, by moving the leg rest frame 5.3 in the vertical direction the pawl element L1' provides separation of the pawl element L1' from the latch element L1.

In another embodiment, a release mechanism can be actuated by an actuator to cause the latch element L2 to release the pawl element L2'.

The comfort inclined position P2 of the seat 1 is a substantial inclined position in which the backrest 3 and/or the leg rest 4 are in a substantial inclined position. In particular, the backrest 3 is in a position with an angle with respect to the vertical axis z of about more than 12° and less than 90°. The leg rest 4 is in a position with an angle with respect to the vertical axis z of about more than 0° and less than 85°. Further, the shoulder support 3.1 and/or the headrest 3.2 can be in a substantial inclined position. In particular, the shoulder support 3.1 and/or the headrest 3.2 can be in a position with an angle with respect to the vertical axis z of about more than 3° and less than 35°.

In the shown embodiment, the single levers 7, 8 are positioned with an angle with respect to the vertical axis z of about 30°. The seat pan 2 is slightly inclined with respect to the horizontal plane, wherein the front seat pan side 5.1.3 is positioned higher than the back seat pan side 5.1.4. It is also possible to position the seat pan 2 parallel to the floor F as desired by the passenger.

Further, the base structure 6, in particular the lower and the upper tracks 6.1, 6.2 are both positioned in the TTL position P1. Alternatively, the upper track 6.2 can be positioned in the longitudinal direction, for example if the aft and/or fore space of the seat 1 provides enough space for the length adjustment of the seat 1.

**Figure 3** is showing a side view of the seat 1 with the seat 1 being in the sleeping position P3.

The sleeping position P3 of the seat 1 is a position in which the backrest 3 and/or the leg rest 4 are in a substantial inclined position. In particular, the backrest 3 is in a position with an angle with respect to the vertical axis z of about 90°, in particular between 85° and 95°. The leg rest 4 is in a position with an angle with respect to the vertical axis z of about 45°, in particular between 40° and 50°. Further, the shoulder support 3.1 and/or the headrest 3.2 can be in a position with an angle with respect to the vertical axis z of about 90°, in particular between 85° and 95°.

In the shown embodiment, the seat 1 is in a completely elongated sleeping position P3, wherein the seat parts are positioned in a horizontal plane.

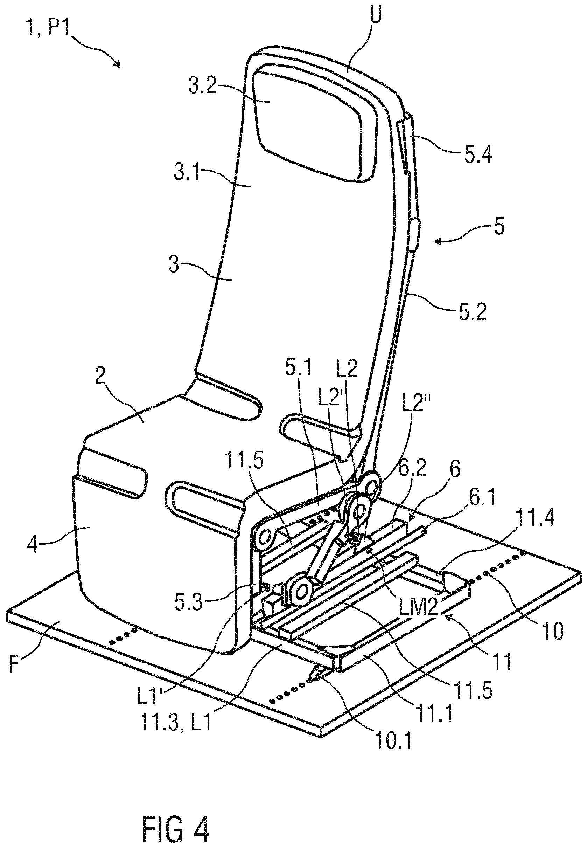

In **figure 4** a side view of the seat 1 is shown with the seat 1 being in the TTL position P1 and having the upholstery U.

In the shown embodiment, the upholstery U is a single-piece upholstery U, in particular comprising a separated headrest cushion fixed to a headrest region of the upholstery U.

The aircraft floor F provides a number of fixation points 10 for mounting the base structure 6 of the seat 1 to the aircraft floor F. Further, the base frame 11 is fixed to the floor F by four anchorage points 10.1.

The base structure 6 comprises a base frame 11 having two lateral sides 11.1, wherein only one of the lateral sides 11.1 is shown. Further, the base structure 6 comprises a front frame side 11.2 and a back frame side 11.3.

The lateral sides 11.1 are fixedly secured to the floor F. Moreover, the front frame side 11.2 and the back frame side 11.3 are supported by a number of support rods 11.4. For example, the support rods 11.4 are provided to stabilize the base frame 11 against vibrations caused by the sliding movement of the track mechanism and/or caused by an operating aircraft.

In the shown embodiment, the lower track 6.1 is fixedly mounted to the base frame 11, in particular at two points each provided on one of the front frame side 11.2 and the back frame side 11.3. The lower track 6.1 is mounted parallel and next to the support rods 11.4.

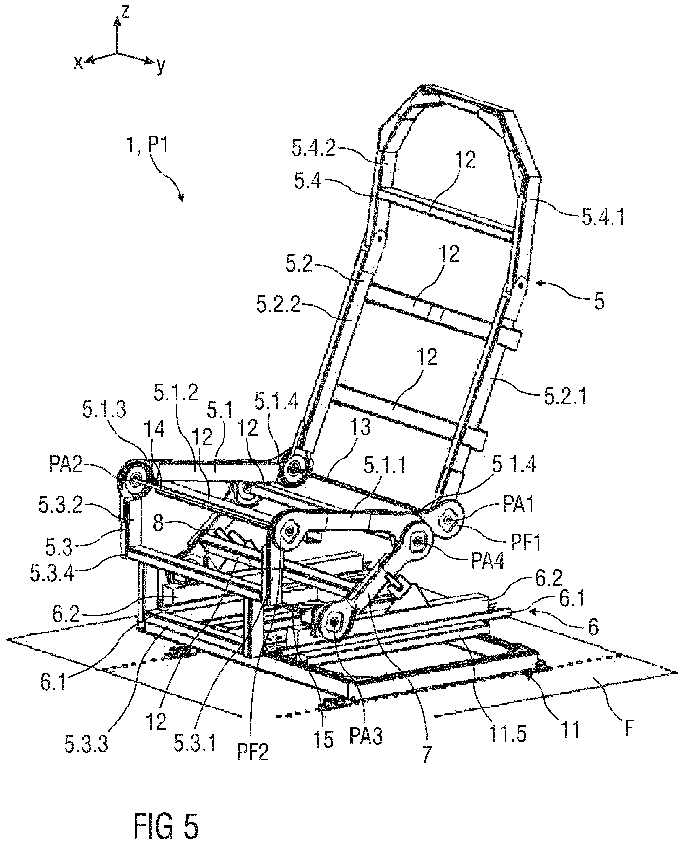

**Figure 5** is a perspective view of one exemplary embodiment of the seat 1 with the seat 1 being shown in the TTL position P1 without the upholstery U and a more detailed view of the seat support structure 5. Further, the base structure 6 and the aircraft floor F are shown.

The seat support structure 5 provides the seat pan frame 5.1, the backrest frame 5.2, the leg rest frame 5.3 and the shoulder support and headrest frame 5.4.

In one embodiment, the seat support structure parts are designed as welded tube frames, in particular made of a high-strength steel and/or any other possible alloys of metal and/or other elements, for example carbon. In another embodiment, the seat support structure parts are each made of a different material, for example depending on a determined stress and load level of each of the seat support structure parts.

The seat support structure 5 provides a number of support elements 12 connecting each of the lateral arranged sides of the seat support structure 5. For example, the support elements 12 are designed as welded tube frames, in particular made of metal to stabilize the seat support structure 5 against mechanical vibrations.

The lateral arranged sides 5.4.1, 5.4.2 of the shoulder support and headrest frame 5.4 are coupled to each other by one support element 12. The lateral arranged sides 5.2.1, 5.2.2 of the backrest frame 5.2 are coupled to each other by two support elements 12.

Moreover, the lateral seat pan sides 5.1.1, 5.1.2 are coupled to each other by one support element 12 arranged in the front seat pan side 5.1.3.

Further, the leg rest frame 5.3 provides two lateral arranged sides 5.3.1, 5.3.2 and two individual frame parts, wherein a front leg rest frame part 5.3.3 has a narrower shape than a back leg rest frame part 5.3.4. The front leg rest frame part 5.3.3 can be fixedly mounted to the back leg rest frame part 5.3.4, for example by a form-fitted, force-fitted and/or adhesive connection. Alternatively, the front frame part 5.3.3 and the back frame part 5.3.4 of the leg rest frame 5.3 can comprise the same shape, in particular the same width.

In the shown embodiment, the backrest pivot axis PA1 is defined by a connecting element 13 pivotably coupling the lateral arranged sides 5.2.1, 5.2.2 of the backrest frame 5.2 with the back seat pan side 5.1.4.

Further, the leg rest pivot axis PA2 of the leg rest frame 5.3 is defined by another connecting element 14 pivotably coupling the lateral arranged sides 5.3.1, 5.3.2 of the leg rest frame 5.3 with the front seat pan side 5.1.3. In particular, the connecting elements 13, 14 are connecting links and/or rods.

The base structure 6 provides parallel arranged lower tracks 6.1 and parallel arranged upper tracks 6.2 slidable coupled to the lower tracks 6.1. Further, the lower tracks 6.1 are mounted on the base frame 11.

Additionally, the base structure 6 provides the single levers 7, 8 which are connected to each other by two support elements 12. One of the two support elements 12 is provided between each of the second pivot points PA4 of the single levers 7, 8 so that the single levers 7, 8 are substantially connected in relation to the seat pan frame 5.1. The other one of the two support elements 12 is provided in a region next to the first pivot points PA3 which are substantially connecting the single levers 7, 8 in relation to the base structure 6. For example, the support element 12 connecting the second pivot points PA4 provides a mechanical support to the seat pan frame 5.1.

Moreover, the first pivot points PA3 of the single levers 7, 8 are coupled to each other and to the upper rail 6.2 by a connecting element 15, in particular a connecting link and/or rod.

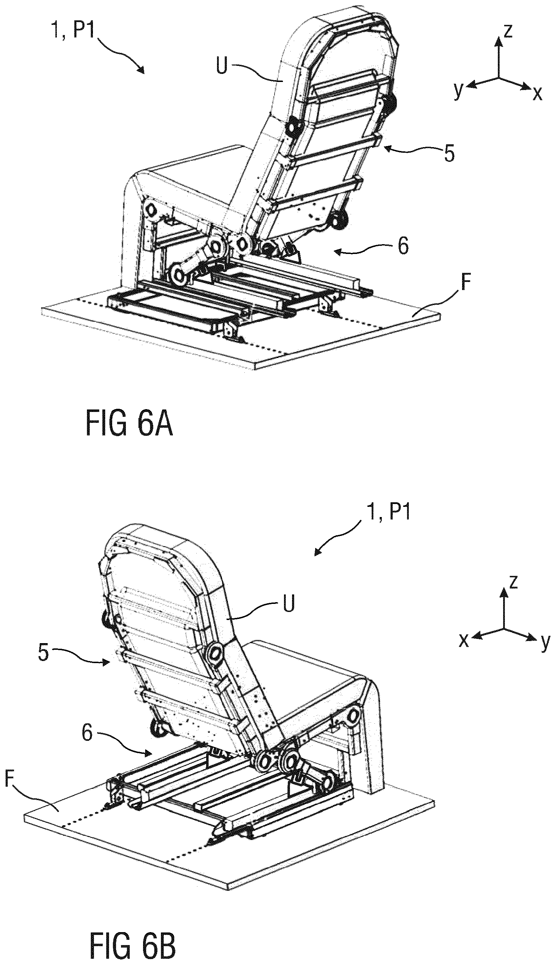

**Figures 6A to 6C** are perspective views of the seat 1 showing in figure 5 with the seat 1 being in the TTL position P1.

In each of the figures 6A and 6B the seat 1 is shown with the support structure 5 covered by the upholstery U. The seat support structure 5 is connected to the base structure 6, therefore to the aircraft floor F.

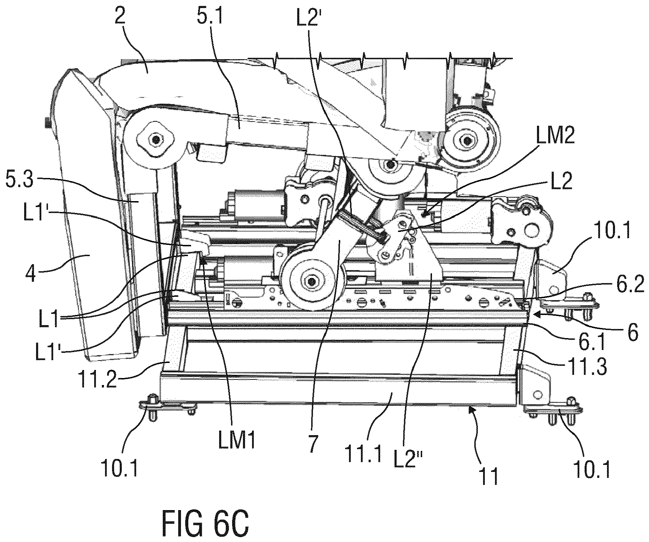

In figure 6C the seat 1 is shown with the seat support structure 5 and without the upholstery U. Further, the seat support structure 5 is connected to the base structure 6, therefore to the aircraft floor F.

In the shown embodiment, a number of desirable pivot fittings PF1 to PF4' to adjust the inclination movements of the seat parts is shown. However, it should be understood that different types, features and/or designs of pivot fittings PF1 to PF4' are also possible for the exemplary embodiment.

According to the shown embodiment, each of the pivot fittings PF1 to PF4' provides a recliner mechanism having an increased load-bearing capacity. Thereby, absorption of force in an event of an accident is increased.

For example, the recliner mechanism provides one of shown continuous or continuous disc recliners R1 to R2'. In particular, the continuous disc recliners R1, R1' can provide a load-bearing capacity of about 2000Nm. Further, the continuous disc recliners R2, R2' can provide a load-bearing capacity of about 2500Nm.

In addition, each of the continuous disc recliners R1, R2 can be driven by a drive unit D coupled to those recliners R1, R2. For example, the drive unit D provides a power drive and/or a so-called ferrite motor or a rear earth motor, in particular a ferrite magnet motor or a rear earth magnet electric motor. It should be understood that any other appropriate motors can be provided in the drive unit D to adjust the inclination movements of the pivot fittings PF1 to PF4'. Therefore, the independent adjustment of the movements of at least one of the seat pan 2, the backrest 3 or the leg rest 4 is provided.

In another embodiment, the recliner mechanism provided by the pivot fittings PF1 to PF4' can provide one of shown pawl and sector disc recliners R3 to R3". In particular, one of the pawl and sector disc recliners R3 to R3" can provide a load-bearing capacity of about 2000Nm, another one providing a load-bearing capacity of about 2500Nm and a third one providing a load-bearing capacity of about 4000Nm.
Moreover, a recliner interface using one welding geometry for the pivot fittings PF1 to PF4' and for each load class can be achieved. Furthermore, the seat 1 is continuously adjustable in many positions due to the application of the continuous disc recliners R1 to R2' and/or the pawl and sector disc recliners R3 to R3".

In a further embodiment, each of the pivot fittings PF1 to PF4' can comprise not further shown flexible elements, in particular spring elements, for example recoil springs. Thus, a drive performance can be reduced by the arrangement of the flexible elements at fixed pivots of the pivot fittings PF1 to PF4'.

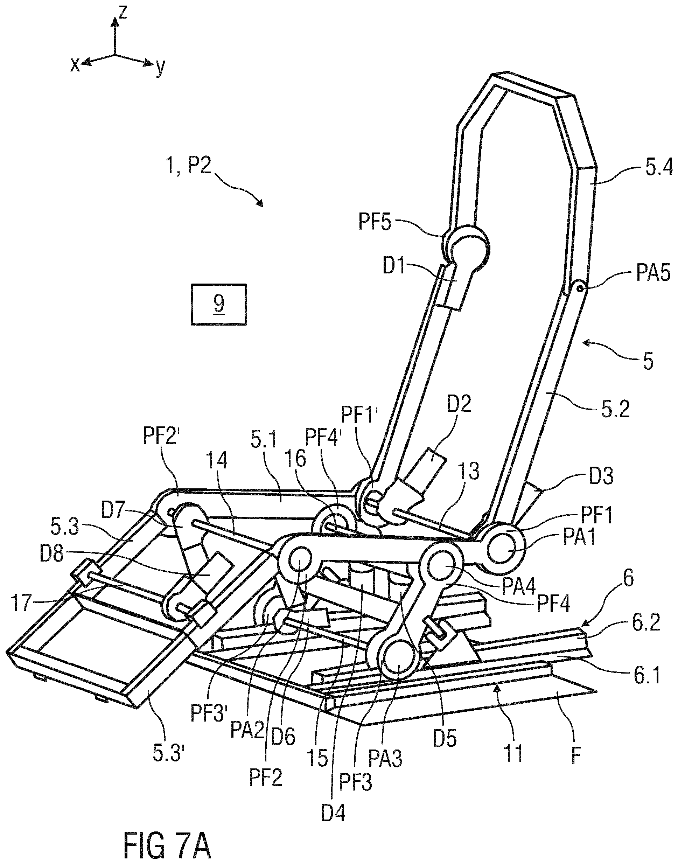

**Figures 7A to 7B** are perspective views of the seat 1 showing in figure 1 without the upholstery U and with a number of drive units D1 to D8. The seat 1 is positioned in one of the many possible comfort inclined positions P2.

The number of drive units D1 to D8 is provided to independently drive the frame parts of the seat support structure 5 and at least one of the pivot fittings PF1 to PF5.

In the shown embodiment, each of the drive units D2 to D8 are connected to each of the connecting elements 13 to 17 to independently drive the pivot fittings PF1 to PF5.

For example, a single drive unit D1 is provided for the shoulder support pivot fitting PF5 and drive units D2, D3 are provided for the backrest pivot fittings PF1, PF1'.

Further, drive units D4, D5 are provided for the single lever second pivot fittings PF4, PF4' to adjust the inclination movement of the seat pan frame 5.1.

Moreover, a single drive unit D6 is provided for the single lever first pivot fittings PF3, PF3' to adjust the movement in the longitudinal direction and in the vertical direction of the seat pan frame 5.1.

Single drive unit D7 is provided for the leg rest pivot fittings PF2, PF2' and a single drive unit D8 is provided for the leg rest frame 5.3 which is, as shown in the embodiment, adjustable in length. Therefore, the leg rest frame 5.3 comprises an adjustable, in particular extendable and retractable, second leg rest frame 5.3'. The length adjustment allows a customized length of the leg rest frame 5.3 of different passengers.

In the shown embodiment the second leg rest frame 5.3' is in an extended position and comprising the connecting element 17 providing the drive unit D8 for length adjustment of the second leg rest frame 5.3'.

Further, the control unit 9 is provided to independently control the drive units D1 to D8.

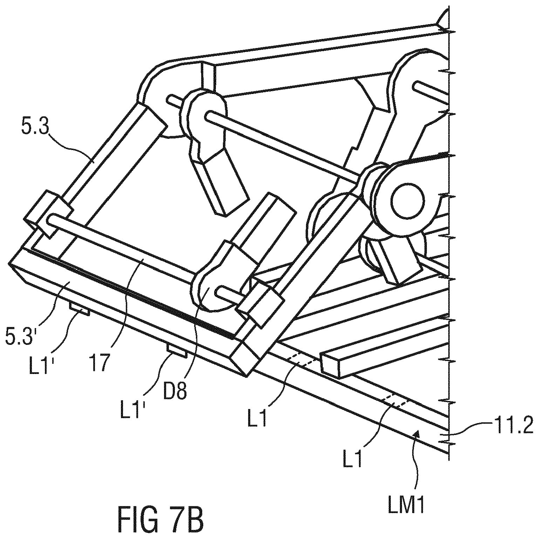

Figure 7B shows the length adjustable leg rest frame 5.3 comprising the second leg rest frame 5.3' being in a retracted position, the connecting element 17 providing the drive unit D8 for length adjustment of the second leg rest frame 5.3'.

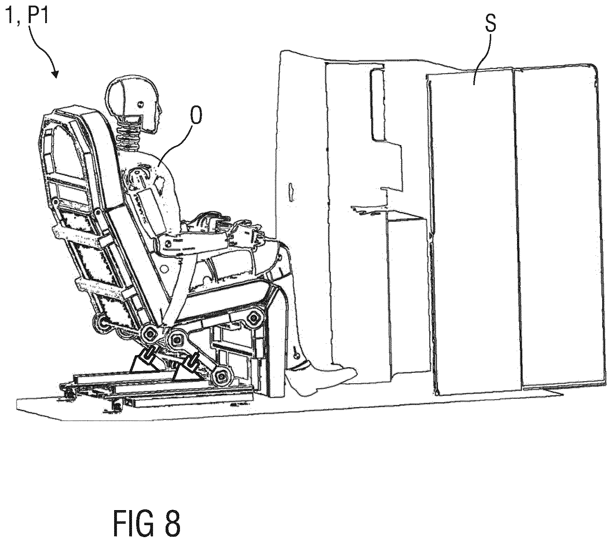

**Figure 8** shows a perspective view of the seat 1 mounted in a seat suite S.

The seat 1 is positioned in the TTL position P1 having an occupant O sitting in the upholstered seat 1.

The seat suite S is for example a private and individual seat cabin arranged in an aircraft cabin to provide privacy. The seat suite S is fixedly attached to the aircraft floor F.

### LIST OF REFERENCES

- 1: seat
- 2: seat pan
- 3: backrest
- 3.1: shoulder support
- 3.2: headrest
- 4: leg rest
- 5: seat support structure
- 5.1: seat pan frame
- 5.1.1, 5.1.2: lateral seat pan side
- 5.1.3: front seat pan side
- 5.1.4: back seat pan side
- 5.2: backrest frame
- 5.2.1, 5.2.2: lateral arranged side
- 5.3: leg rest frame
- 5.3.1, 5.3.2: lateral arranged side
- 5.3.3: front leg rest frame part
- 5.3.4: back leg rest back frame part
- 5.4: shoulder support and headrest frame
- 5.4.1, 5.4.2: lateral arranged side
- 6: base structure
- 6.1, 6.2: track
- 7, 8: single lever
- 9: control unit
- 10: fixation point
- 11: base frame
- 11.1: lateral side
- 11.2, 11.3: frame side
- 11.4: support rod
- 12: support element
- 13 to 17: connecting element

- x, y, z: axis

- D to D8: drive unit
- F: floor
- FB: four-bar linkage
- L1, L2: latch element
- L1', L2': pawl element
- LM1, LM2: latch mechanism
- O: occupant
- P1 to P3: TTL, comfort and sleeping position
- PA1, PA2: pivot axis
- PA3, PA4: pivot point
- PA5: pivot axis
- PF1 to PF4': pivot fitting
- U: upholstery
- R1 to R2': continuous disc recliners
- R3 to R3": pawl and sector disc recliners
- S: seat suite

## Claims

1. A seat for a vehicle comprising:
- a seat support structure which is connected to a base structure, wherein the seat support structure provides
- a seat pan having a seat pan frame with two lateral seat pan sides, a front seat pan side and a back seat pan side,
- a backrest having a backrest frame which is pivotably mounted to the back seat pan side at a backrest pivot axis,
- a leg rest having a leg rest frame which is pivotably mounted to the front seat pan side at a leg rest pivot axis,
- wherein the seat pan, the backrest and the leg rest are articulated with respect to each other such that the seat is positionable into at least one of a taxi, takeoff and landing position, a comfort inclined position (inclined position) and a sleeping position, and
- wherein the seat is locked to the base structure by at least one latch mechanism when the seat is in the taxi, takeoff and landing position.

2. The seat according to claim 1, wherein the seat support structure is pivotably connected to the base structure by a single lever on each of two lateral seat pan sides and wherein the seat pan, the backrest and the leg rest are articulated with respect to each other and with respect to the base by each of the single levers such that the seat is positionable into at least one of a taxi, takeoff and landing position, a comfort inclined position or a sleeping position.

3. The seat according to claim 1 or 2, wherein the seat support structure is connected to a floor by the base structure, and wherein the base structure provides at least a track mechanism for length adjustment of the seat support structure.

4. The seat according to claim 1, wherein the latch mechanism is configured as at least one latch element and at least one pawl element, wherein at least one of the latch elements is provided by the base structure and at least one of the pawl elements is provided by the leg rest and/or at least one of the single levers, or vice versa.

5. The seat according to claim 4, wherein at least one of the latch elements is defined by a front frame side provided by a base frame of the base structure providing the latching mechanism of the leg rest pawl element to the base frame.

6. The seat according to claim 4, wherein at least one of the latch elements is provided in relation to the track mechanism of the base structure providing the latching mechanism of the at least one single lever to the base structure.

7. The seat according to any one of the preceding claims, wherein the pawl element is configured as a counter bearing.

8. The seat according to claim 7, wherein the counter bearing provides a temporary four-bar linkage of the seat.

9. The seat according to claim 2, wherein a movement in a longitudinal direction and a vertical direction of the seat support structure in relation to the base structure is provided by at least a movement of the single levers.

10. The seat according to claim 2, wherein the movement of the seat support structure and/or the seat pan frame is provided by a pivoting movement of the single levers around a transverse axis.

11. The seat according to claim 2, wherein each of the single levers comprises two pivot points, wherein a first pivot point is substantially connected in relation to the base structure and a second pivot point is substantially connected in relation to the seat pan frame.

12. The seat according to claim 11, wherein the second pivot point is provided in the area of the back seat pan side.

13. The seat according to claim 11, wherein the single levers are coupled to each other by at least one of the first pivot point and/or the second pivot point by a support element.

14. The seat according to any one of the preceding claims, wherein the first pivot point of each of the single levers is substantially connected in relation to an upper track slidable coupled to a fixed lower track of the track mechanism.

15. The seat according to at least any one of the preceding claims,
wherein the backrest is pivotably connected to the seat pan by at least one of a backrest pivot fitting in the backrest pivot axis.

16. The seat according to at least any one of the preceding claims,
wherein the leg rest is pivotably connected to the seat pan by at least one of a leg rest pivot fitting in the leg rest pivot axis.

17. The seat according to at least any one of the preceding claims,
wherein a number of drive units are provided to independently drive/actuate the backrest pivot fitting, the leg rest pivot fitting and the recliner mechanism.

18. The seat according to claim 17, wherein a control unit is provided to independently control the drive units.

19. The seat according to claim 18, wherein the control unit is configured to control adjusting movement of at least one of the seat pan, the backrest or the leg rest.

20. The seat according to at least any one of the preceding claims,
wherein the backrest further comprises a shoulder support and/or a headrest.

21. The seat according to at least any one of the preceding claims,
wherein the backrest and the shoulder support are articulated with respect to each other by at least a shoulder support pivot fitting.

22. The seat according to at least any one of the preceding claims,
wherein the leg rest is adjustable in length.

23. The seat according to any one of the preceding claims, wherein the seat support structure provides an upholstery which is arranged on the seat pan, the backrest and the leg rest.
